# EUROPÄISCHE PATENTANMELDUNG

(11) **EP 2 031 509 A1**
(43) Veröffentlichungstag der Anmeldung: **04.03.2009**
(21) Anmeldenummer: 08104873.8
(22) Anmeldetag: 24.07.2008
(51) Int. Cl.: G06F 9/46

(54) **Verfahren und Anordnung zur Erzeugung und/oder Nutzung eines generischen Webdienstes**

(30) Priorität: 27.08.2007 DE 102007040405
(71) Anmelder: Fujitsu Siemens Computers GmbH, 80807 München (DE)
(72) Erfinder: Kämpfe, Christiane, 85586 Poing (DE)
(74) Vertreter: Epping - Hermann - Fischer

(57) **Zusammenfassung**

Ein Verfahren zur Erzeugung eines generischen Webdienstes umfasst die Definition einer übergeordneten Funktionsidentifikation (21), das Bereitstellen einer Applikationsbibliothek (5) umfassend eine erste (6) und mindestens eine zweite (7) ausführbare Applikation, das Bereitstellen einer Konfigurationsdatei (4) in einem Konfigurationsverzeichnis, das Bereitstellen eines Adapterprogramms (3), sowie die Generierung eines Webdienstanbieters (2). Die Konfigurationsdatei (4) weist eine Zuordnung eines Applikationsnamens (8), eines Speicherortes (9) und eines Zusatzes (10) zu der übergeordneten Funktionsidentifikation (21) auf. Das Adapterprogramm (3) ruft die der übergeordneten Funktionsidentifikation (21) gemäß Konfigurationsdatei (4) zugeordnete erste (6) oder zweite (7) ausführbare Applikation auf. Zusätzlich sind ein Verfahren zur Nutzung des generischen Webdienstes, sowie eine Anordnung zur Erzeugung und/oder Nutzung des generischen Webdienstes vorgesehen.

## Beschreibung

Die Erfindung betrifft ein Verfahren und eine Anordnung zur Erzeugung und/oder Nutzung eines generischen Webdienstes.

Im Bereich verteilter und über ein Datennetzwerk wie beispielsweise das Internet nutzbarer Software sind Webdienste, auch bekannt als Webservices, weit verbreitet. Ein Webdienst ist eine Softwareapplikation, die über eine einheitliche Bezeichnung für Ressourcen, die Uniform Resource Identifier oder URI genannt wird, eindeutig identifizierbar ist und deren Funktion über eine standardisierte Schnittstelle aufgerufen wird. Die standardisierte Schnittstelle wird üblicherweise im Simple Object Access Protocol, genannt SOAP, definiert, welches auf der erweiterbaren Auszeichnungssprache Extensible Markup Language, genannt XML, basiert und Plattform unabhängig ist. Man unterscheidet zwischen einem Webdienstanbieter, der eine bestimmte Funktionalität bereitstellt und einem Webdienstkonsumenten, der diese Funktionalität benutzt. Der Webdienstanbieter und der Webdienstkonsument sind als Softwareprogramme realisiert und können auf verschiedenen, über ein Datennetzwerk verbundenen Rechnern laufen. Der Austausch von SOAP-Nachrichten, die Anfrage beziehungsweise Antwort bei der Webdienstnutzung übertragen, erfolgt üblicherweise über Standardinternetprotokolle, wie zum Beispiel HTTP, HTTPS.

Es existieren Softwarewerkzeuge, die aus einer bestimmten Applikation automatisch einen Webdienst erzeugen. Hierbei wird für jeden erzeugten Webdienst eine neue Portnummer zur Adressierung des Dienstes bei der Kommunikation zwischen Webdienstanbieter und Webdienstkonsument verwendet. Dieses Verfahren birgt den Nachteil, dass bei Änderung der dem Webdienst zugrunde liegenden Applikation und anschließender Neugenerierung des Webdienstes jedes Mal eine neue Portnummer vergeben wird. Dies erschwert einerseits die Versionspflege der zugrunde liegenden Applikation erheblich. Andererseits ist die Verwaltung einer größeren Anzahl von Portnummern schwierig und aufwändig.

Des Weiteren existieren Softwarewerkzeuge, die Programme auf Basis des Common Gateway Interface, CGI, Standards, oder Module zur Nutzung im Zusammenhang mit proprietären Webservern, wie beispielsweise Apache oder IIS, erzeugen. Beide Möglichkeiten erlauben nicht die volle Kontrolle über die Kommunikation zwischen Webdienstanbieter und -konsument, bezüglich beispielsweise Time-Out- oder Keep-Alive-Ereignissen. Zudem bestehen in der Folge unerwünschte Abhängigkeiten von den proprietären Webservern, die beispielsweise eine Anpassung des Webdienstes bei Änderung des Webservers erfordern.

Der Erfindung liegt daher die Aufgabe zugrunde, ein verbessertes Verfahren und eine verbesserte Anordnung zu beschreiben, das beziehungsweise die die Erzeugung und/oder Nutzung eines übergeordneten, also generischen, Webdienstes ermöglicht. Dabei sollen das Verfahren und die Anordnung betriebssystemunabhängig sein.

Diese Aufgabe wird erfindungsgemäß mit dem Verfahren des Patentanspruchs 1, mit dem Verfahren des Patentanspruchs 9 und der Anordnung gemäß Patentanspruch 13 gelöst. Weiterbildungen und Ausgestaltungen sind jeweils Gegenstände der abhängigen Ansprüche.

In einer Ausführungsform umfasst ein Verfahren zur Erzeugung eines Webdienstes die Definition einer übergeordneten Funktionsidentifikation, das Bereitstellen einer Applikationsbibliothek, das Bereitstellen einer Konfigurationsdatei in einem Konfigurationsverzeichnis, die Erstellung eines Adapterprogramms, sowie die Generierung eines Webdienstanbieters und eines Webdienstkonsumenten, wobei die Dienste des Webdienstanbieters von dem Webdienstkonsumenten über die übergeordnete Funktionsidentifikation über genau eine Portnummer aufrufbar sind. Die Applikationsbibliothek umfasst eine erste und mindestens eine zweite ausführbare Applikation. Die Konfigurationsdatei stellt die für die übergeordnete Funktionsidentifikation einen Applikationsnamen, einen Verweis auf die Applikationsbibliothek, sowie eine Information über die Verwendung eines Zusatzparameters bereit. Das Adapterprogramm generiert einen Aufruf der der übergeordneten Funktionsidentifikation gemäß Konfigurationsdatei zugeordneten ersten oder zweiten ausführbaren Applikation.

Vorteilhafterweise wird mit diesem Verfahren genau ein Webdienstanbieter erzeugt, mit dem verschiedene ausführbare Applikationen aufgerufen werden können, da mittels der Konfigurationsdatei der übergeordneten Funktionsidentifikation jeweils die erste oder mindestens die zweite ausführbare Applikation zugeordnet ist. Somit wird nur eine Portnummer verwendet. Dadurch, dass das Verfahren auf dem Standard für Webdienste basiert, ist es vorteilhafterweise betriebssystemunabhängig. Die Verwaltung unterschiedlicher Versionen einer ausführbaren Applikation, die als Webdienstanbieter bereitgestellt wird, wird mit diesem Verfahren erheblich vereinfacht. Mit Vorteil können der einmal generierte Webdienstanbieter und das Adapterprogramm für weitere ausführbare Applikationen, die in der Applikationsbibliothek abgespeichert und über die Anpassung der Konfigurationsdatei eingebunden werden, wieder verwendet werden.

In einer vorteilhaften Weiterbildung wird die Schnittstelle zu der ersten und mindestens der zweiten Applikation innerhalb der Applikationsbibliothek unter Verwendung der Extensible Markup Language für Eingabe und Ausgabe definiert.

In einer vorteilhaften Weiterbildung wird die Konfigurationsdatei im Format der Extensible Markup Language erstellt.

In einer vorteilhaften Weiterbildung umfasst die Schnittstelle zu der ersten und mindestens der zweiten Applikation innerhalb der Applikationsbibliothek den Zusatzparameter in Form eines C-Headers.

In einer vorteilhaften Weiterbildung ist der Webdienstanbieter zusätzlich zur Verarbeitung einer Anfrage über HTTP GET und/oder HTTP POST und zur Generierung einer zugehörigen Antwort eingerichtet.

In einer vorteilhaften Ausgestaltung besteht die Möglichkeit, die erste und/oder die zweite ausführbare Applikation mit einer geeigneten Nachladetechnik, wie beispielsweise Threaded und Keep-alive nachzuladen.

In einer weiteren vorteilhaften Ausgestaltung kann zu jedem Zeitpunkt eine weitere Konfigurationsdatei in dem Konfigurationsverzeichnis gespeichert werden. Somit kann auch während ein Webdienst läuft eine weitere Applikation eingebunden werden.

In einer weiteren vorteilhaften Ausgestaltung ist eine weitere Applikationsbibliothek ansprechbar.

In einer Ausführungsform umfasst ein Verfahren zur Nutzung eines Webdienstes das Einlesen einer Anfrage des Webdienstkonsumenten über die Portnummer, die Analyse der Anfrage hinsichtlich der übergeordneten Funktionsidentifikation und übergebener Dienstparameter, das Lesen der Konfigurationsdatei aus dem Konfigurationsverzeichnis, das Auflösen der Zuordnung der übergeordneten Funktionsidentifikation zur ersten oder zweiten ausführbaren Applikation gemäß Konfigurationsdatei, den Aufruf der zugeordneten ersten oder mindestens zweiten ausführbaren Applikation in der Applikationsbibliothek gemäß Konfigurationsdatei mit den übergegebenen Dienstparametern, das Generieren einer Antwort aus einem von der ersten oder der zweiten ausführbaren Applikation zurück gelieferten Ergebnis, sowie das Übermitteln der Antwort über die Portnummer und das Datennetzwerk an den Webdienstkonsumenten.

Vorteilhafterweise können mit diesem Verfahren über die standardisierte Webdienstschnittstelle verschiedene ausführbare Applikationen über genau eine Portnummer angesprochen werden. Durch die Verwendung des Webdienststandards ist das Verfahren betriebssystemunabhängig und damit auch unabhängig von einem proprietären Webserver, wie beispielsweise Apache oder IIS. Mit Vorteil kann der Webdienstkonsument mit derselben übergeordneten Funktionsidentifikation den Webdienstanbieter auf einem anderen Server mit einem anderen Betriebssystem adressieren, ohne eine Anpassung vornehmen zu müssen. Dabei hat der Webdienstkonsument immer die Kontrolle über die Kommunikation mit dem Webdienstanbieter. Vorteilhafterweise wird die Verwaltung verschiedener Versionen einer ausführbaren Applikation erheblich vereinfacht, da über ein und denselben Webdienst und damit über genau die gleiche Portnummer immer die gewünschte ausführbare Applikation durch Zuordnung in der Konfigurationsdatei aufgerufen wird.

In einer vorteilhaften Ausgestaltung erfolgt die Kommunikation zwischen Webdienstanbieter und Webdienstkonsument unter Verwendung des Webdienststandards.

In einer vorteilhaften Ausgestaltung ist der Webdienstanbieter zusätzlich zur Verarbeitung von Anfragen mittels HTTP GET und/oder HTTP POST und zur Erzeugung von zugehörigen Antworten ausgelegt.

In einer vorteilhaften Weiterbildung werden die Dienstparameter im XML-Format übergeben.

In einer Ausführungsform umfasst eine Anordnung zur Erzeugung und/oder Nutzung des Webdienstes den Webdienstanbieter, die Konfigurationsdatei, die Applikationsbibliothek, das Adapterprogramm und den Webdienstkonsumenten. Der Webdienstanbieter beinhaltet eine Datenschnittstelle zur Kommunikation über ein Datennetzwerk, beispielsweise das Internet, die genau eine Portnummer nutzt. Die Konfigurationsdatei umfasst eine Zuweisung des Applikationsnamens der ersten oder der zweiten ausführbaren Applikation zu der übergeordneten Funktionsidentifikation, die Angabe des Speicherorts der ersten oder der zweiten ausführbaren Applikation innerhalb der Applikationsbibliothek und Information über das Vorhandensein des Zusatzparameters. Die Applikationsbibliothek umfasst die erste und mindestens die zweite ausführbare Applikation.

Bei Eingang einer Anfrage über die Portnummer des Webdienstanbieters ruft dieser das Adapterprogramm auf und übergibt dabei die übergeordnete Funktionsidentifikation und die Dienstparameter aus der Anfrage. Das Adapterprogramm entnimmt aus der Konfigurationsdatei die Zuordnung der übergebenen übergeordneten Funktionsidentifikation zur ersten oder zweiten ausführbaren Applikation. Anschließend ruft das Adapterprogramm die zugeordnete erste oder zweite ausführbare Applikation innerhalb der Applikationsbibliothek mit den Dienstparametern auf. Das Ergebnis der ersten oder der zweiten ausführbaren Applikation wird an den Webdienstanbieter zurückgegeben. Dieser generiert daraus eine Antwort und übermittelt diese über die Portnummer und das Datennetzwerk an den Webdienstkonsumenten.

Mit Vorteil verwendet diese Anordnung genau eine Portnummer, um innerhalb eines Webdienstanbieters die erste oder mindestens die zweite ausführbare Applikation anzusprechen. Liegt eine neue Version der ersten ausführbaren Applikation, beispielsweise eine dritte ausführbare Applikation vor, so wird diese durch das Abspeichern der dritten ausführbaren Applikation in der Applikationsbibliothek und die Anpassung der Zuweisung des Applikationsnamens zur übergeordneten Funktionsidentifikation innerhalb der Konfigurationsdatei in den bestehenden Webdienst eingebunden. Die Neugenerierung des Webdienstes mit damit verbundener Generierung einer neuen Portnummer ist vorteilhafterweise nicht erforderlich. Folglich sinkt die Anzahl zu verwaltender Portnummern. Auch das Adapterprogramm kann unverändert weiter verwendet werden. Mit Vorteil ermöglicht die Anordnung damit eine zeitlich optimierte Versionspflege.

In einer weiteren vorteilhaften Ausgestaltung ist das Adapterprogramm zusätzlich zur Verarbeitung des Zusatzparameters geeignet.

Die Erfindung wird nachfolgend anhand der Figuren näher erläutert. Es zeigen:
- Figur 1: eine beispielhafte Ausführungsform der Anordnung nach dem vorgeschlagenen Prinzip,
- Figur 2: ein beispielhaftes Ablaufdiagramm des erfindungsge- mäßen Verfahrens zur Erzeugung eines Webdienstes,
- Figur 3: ein beispielhaftes Ablaufdiagramm des erfindungsge- mäßen Verfahrens zur Nutzung des Webdienstes.

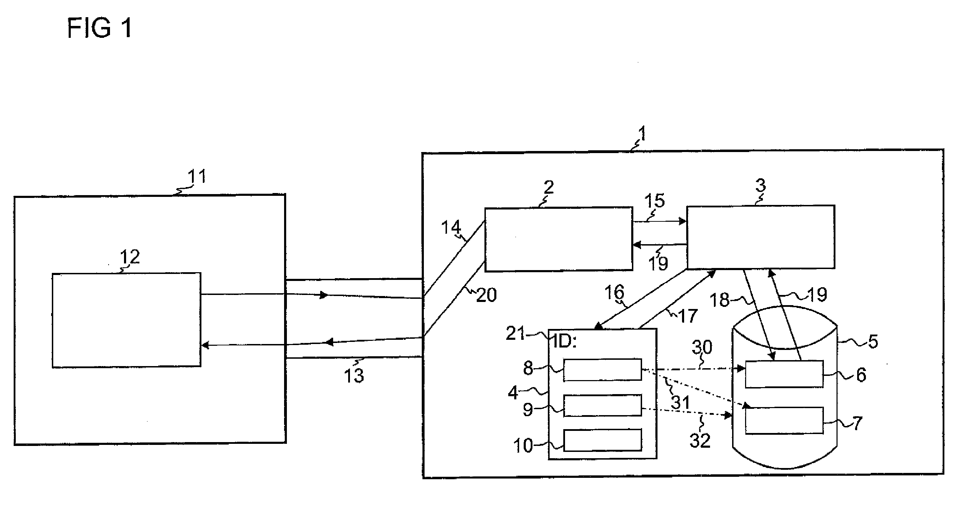

Figur 1 zeigt eine beispielhafte Ausführungsform der Anordnung nach dem vorgeschlagenen Prinzip. Die Anordnung umfasst einen Serverrechner 1 und einen Clientrechner 11. Der Serverrechner 1 ist mit dem Clientrechner 11 über ein Datennetzwerk 13, beispielsweise das Internet, verbunden. Der Clientrechner 11 weist einen Webdienstkonsumenten 12 auf. Der Serverrechner 1 umfasst einen Webdienstanbieter 2, ein Adapterprogramm 3, eine Konfigurationsdatei 4, sowie eine Applikationsbibliothek 5. Die Applikationsbibliothek 5 umfasst eine erste ausführbare Applikation 6 und eine zweite ausführbare Applikation 7. Die Konfigurationsdatei 4 umfasst folgende einer übergeordneten Funktionsidentifikation 21 zugeordneten Informationen: einen Applikationsnamen 8, der einen ersten Verweis 30 auf die erste ausführbare Applikation 6 umfasst, einen Speicherort 9, der einen Verweis 32 auf die Applikationsbibliothek 5 enthält, sowie einen Zusatz 10 mit Information über die Verwendung eines Zusatzparameters.

Der Webdienstkonsument 12 sendet über das Datennetzwerk 13 eine Anfrage 14, umfassend die übergeordnete Funktionsidentifikation 21 und Dienstparameter, an den Webdienstanbieter 2. Der Webdienstanbieter 2 liest die Anfrage 14 über seine Portnummer ein. Der Webdienstanbieter 2 analysiert die Anfrage 14 und generiert einen Aufruf 15 an das Adapterprogramm 3. Ein Einlesen 16 der Konfigurationsdatei 4 durch das Adapterprogramm 3 ergibt eine Zuordnung 17 der übergeordneten Funktionsidentifikation 21 zur ersten ausführbaren Applikation 6 in der Applikationsbibliothek 5. Das Adapterprogramm 3 generiert einen Applikationsaufruf 18 an die erste ausführbare Applikation 6 in der Applikationsbibliothek 5 mit Übergabe der Dienstparameter. Die ausführbare Applikation 6 liefert ein Applikationsergebnis 19 zurück. Das Applikationsergebnis 19 wird an den Webdienstanbieter 2 weitergegeben. Der Webdienstanbieter 2 generiert daraus eine dem Webdienststandard entsprechende Antwort 20. Diese Antwort 20 wird über das Datennetzwerk 13 an den Webdienstkonsumenten 12 übermittelt.

Zu einem späteren Zeitpunkt soll die zweite ausführbare Applikation 7 über den Webdienstanbieter 2 dem Webdienstkonsumenten 12 verfügbar gemacht werden, wobei die zweite ausführbare Applikation 7 beispielsweise eine aktualisierte Version der ersten ausführbaren Applikation 6 sein kann. Dafür wird der Applikationsname 8 in der Konfigurationsdatei 4 so angepasst, dass er einen zweiten Verweis 31 auf die zweite ausführbare Applikation 7 enthält. Somit wird bei einer weiteren Anfrage 14 an den Webdienstanbieter 2 automatisch die ausführbare Applikation 7 aufgerufen.

Vorteilhafterweise erfolgt die Kommunikation zwischen dem Webdienstkonsumenten 12 und dem Webdienstanbieter 2 über genau eine Portnummer. Auch beim Einbinden der zweiten ausführbaren Applikation 7 in den Webdienstanbieter 2 ändert sich diese Portnummer nicht und es wird keine neue Portnummer erzeugt. Vorteilhafterweise kann mit dieser Anordnung die Funktionalität des Webdienstanbieters 2 aktualisiert werden, ohne dass der Webdienstkonsument 12 oder das Adapterprogramm 3 geändert werden müssen, da der Webdienst über die übergeordnete Funktionsidentifikation 21 und nach wie vor die gleiche Portnummer angesprochen wird.

Die erfindungsgemäße Anordnung kann aber auch mit völlig verschiedenen Applikationen arbeiten. Diesen sind unterschiedliche Funktionsidentifikationen zugeordnet. In der Konfigurationsdatei 4 ist für jede Applikation ein Eintrag vorhanden.

Durch die Verwendung des Webdienststandards, sowie standardisierte Formate für Dienstparameter, Schnittstellen und Dateien, die alle auf der Extensible Markup Language beruhen, ist die Anordnung vorteilhafterweise unabhängig von einem bestimmten Betriebssystem. Durch Ausnutzung der selbst beschreibenden Eigenschaft der Extensible Markup Language ist das Einbringen eines Zusatzparameters möglich. Dies erhöht vorteilhafterweise die Flexibilität der beschriebenen Anordnung.

In einer alternativen Ausführungsform kann die erste ausführbare Applikation 6 und/oder die zweite ausführbare Applikation 7 zum Zeitpunkt des Applikationsaufrufs 18 mit einer Nachladetechnik, beispielsweise Threaded und Keep-alive nachgeladen werden.

In einer alternativen Ausführungsform kann zusätzlich die Kommunikation zwischen Webdienstanbieter 2 und Webdienstkonsument 12 über HTTP GET und/oder HTTP POST und zugehörige Antworten erfolgen. Vorteilhafterweise bleibt die Anordnung damit betriebssystemunabhängig.

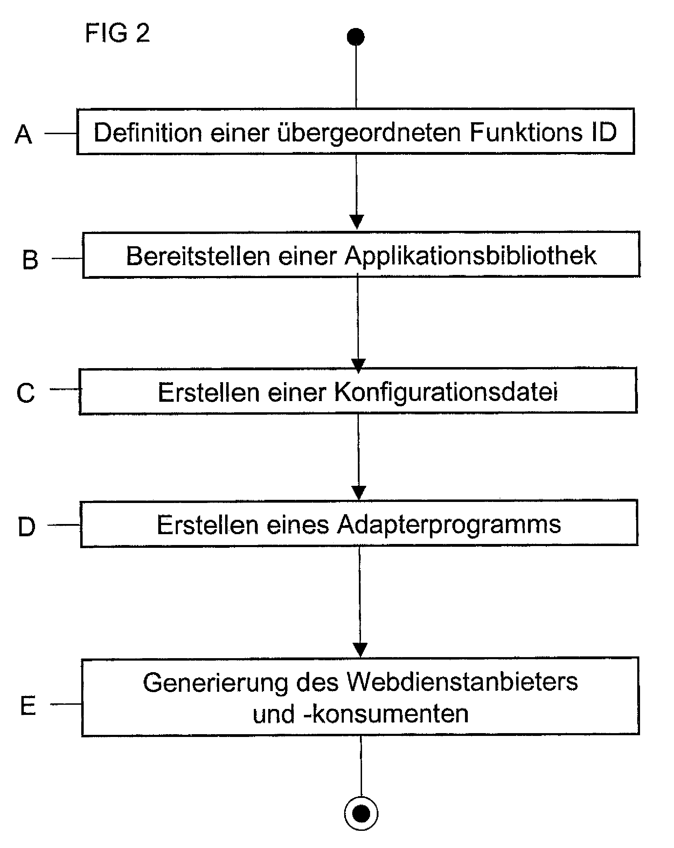

Figur 2 zeigt ein beispielhaftes Ablaufdiagramm des erfindungsgemäßen Verfahrens zur Erzeugung eines Webdienstes. In einem Schritt A wird die übergeordnete Funktionsidentifikation 21 definiert. Dies kann beispielsweise im Sinne der objektorientierten Programmierung in Form des Namens einer Klassenfunktion erfolgen. In einem Schritt B wird die Applikationsbibliothek 5 umfassend die erste 6 und mindestens die zweite 7 ausführbare Applikation bereitgestellt. In einem Schritt C wird die Konfigurationsdatei 4 erzeugt und im Konfigurationsverzeichnis abgespeichert. Die Konfigurationsdatei 4 umfasst die in Figur 1 beschriebenen Informationen. Die Konfigurationsdatei 4 wird beispielsweise im Format der Extensible Markup Language abgespeichert. In einem Schritt D wird das Adapterprogramm 3 erstellt. Das Adapterprogramm 3 umfasst mindestens das Auflösen der übergeordneten Funktionsidentifikation 21 zur ersten oder mindestens zweiten ausführbaren Applikation 6 oder 7 innerhalb der Applikationsbibliothek 5, sowie den Aufruf der zugeordneten ersten oder zweiten ausführbaren Applikation 6 oder 7. Die beim Applikationsaufruf übergegebenen Dienstparameter genügen beispielsweise dem Format der Extensible Markup Language. In einem Schritt E wird sowohl der Webdienstanbieter 2 als auch der Webdienstkonsument 12 generiert. Hierfür können herkömmliche Softwarewerkzeuge, die dies automatisch ausführen, verwendet werden.

Vorteilhafterweise wird mit diesem Verfahren ein übergeordneter, also ein generischer Webdienstanbieter 2 generiert. Die dem Webdienstanbieter 2 zugrunde liegende erste oder zweite ausführbare Applikation 6 oder 7 wird zum Ausführungszeitpunkt durch Zuordnung der übergeordneten Funktionsidentifikation 21 zur ersten oder zweiten ausführbaren Applikation 6 oder 7 gemäß Konfigurationsdatei 4 ausgewählt. Durch Anpassung der Einträge in der Konfigurationsdatei 4 kann beispielsweise eine neue Version der ersten ausführbaren Applikation 6 eingebunden werden. Vorteilhafterweise müssen dafür weder der Webdienstanbieter 2 noch das Adapterprogramm 3 aktualisiert werden. Mit Vorteil wird weiterhin die gleiche Portnummer verwendet. Auch auf der Seite des Webdienstkonsumenten 12 ist keine Änderung erforderlich, da dieser nur die übergeordnete Funktionsidentifikation 21 kennt und verwendet.

Vorteilhafterweise ist das Verfahren durch den Einsatz von Standards wie beispielsweise SOAP und die Extensible Markup Language betriebssystemunabhängig.

In einer alternativen Ausführungsform kann das Adapterprogramm 3 zusätzlich zur Verarbeitung des Zusatzparameters ausgelegt sein.

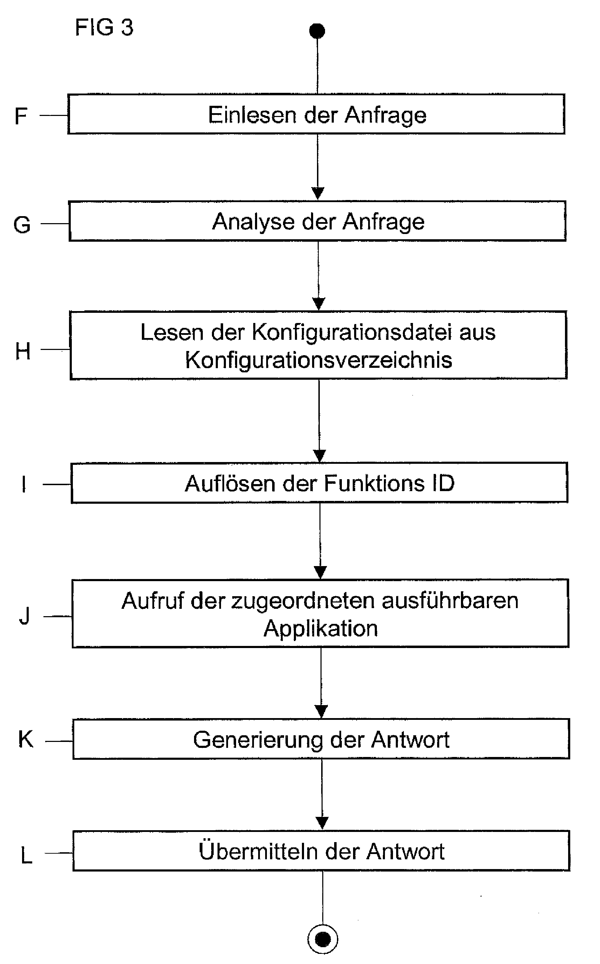

Figur 3 zeigt ein beispielhaftes Ablaufdiagramm des erfindungsgemäßen Verfahrens zur Nutzung des Webdienstes. In einem Schritt F wird die Anfrage 14 über die Portnummer des Webdienstanbieters 2 eingelesen. Die Anfrage kann beispielsweise in Form einer SOAP-Nachricht übermittelt worden sein. In einem Schritt G wird die Anfrage 14 analysiert, die übergeordnete Funktionsidentifikation 21 entnommen und damit das Adapterprogramm 3 aufgerufen. In einem Schritt H wird die Konfigurationsdatei 4 aus dem Konfigurationsverzeichnis eingelesen. In einem Schritt I wird der Konfigurationsdatei 4 die Zuordnung der übergeordneten Funktionsidentifikation 21 zur ersten ausführbaren Applikation 6 in der Applikationsbibliothek 5 entnommen. Daraufhin wird in einem Schritt J die zugeordnete erste ausführbare Applikation 6 mit den Dienstparametern aufgerufen. In einem Schritt K wird aus dem Applikationsergebnis 19 die Antwort 20 des Webdienstanbieters 2 generiert. Die Antwort 20 kann beispielsweise als SOAP-Nachricht erstellt werden. In einem Schritt L wird die Antwort 20 unter Nutzung der Portnummer über das Datennetzwerk 13 übermittelt.

Vorteilhafterweise nutzt das beschriebene Verfahren genau eine Portnummer zur Kommunikation zwischen Webdienstkonsument 12 und Webdienstanbieter 2. Durch Verwendung der übergeordneten Funktionsidentifikation 21 kann die dem Webdienstanbieter 2 zugrunde liegende erste oder zweite ausführbare Applikation 6 oder 7 aktualisiert werden, ohne dass der Webdienstanbieter 2 oder das Adapterprogramm 3 erneuert werden müssen. Damit wird vorteilhafterweise die Generierung einer neuen Portnummer verhindert. Mit Vorteil entfällt die Erneuerung des Webdienstkonsumenten 12.

Vorteilhafterweise ist das Verfahren durch die Verwendung des Webdienststandards für den Austausch von Nachrichten und die Verwendung der Extensible Markup Language für Formate und Dienstparameter betriebssystemunabhängig.

In einer alternativen Ausführungsform kann die Kommunikation zwischen Webdienstanbieter 2 und Webdienstkonsument 12 zusätzlich über HTTP GET und/oder HTTP POST und zugehörige Antworten erfolgen. Vorteilhafterweise bleibt das Verfahren damit betriebssystemunabhängig.

Das beschriebene Verfahren zur Erzeugung und/oder Nutzung eines generischen Webdienstes ist durchaus auf mehr als drei verschiedene ausführbare Applikationen, die in mehr als zwei Applikationsbibliotheken abgespeichert sein können, anwendbar.

Eine Applikation kann auch eine Teilfunktionalität im Sinne einer Unterroutine realisieren.

Die Erfindung ist nicht auf die beschriebenen Ausführungen beschränkt, sondern weitere Ausführungen sind im Rahmen der Erfindung möglich.

### Bezugszeichenliste

- 1: Serverrechner
- 2: Webdienstanbieter
- 3: Adapterprogramm
- 4: Konfigurationsdatei
- 5: Applikationsbibliothek
- 6: erste ausführbare Applikation
- 7: zweite ausführbare Applikation
- 8: Applikationsname
- 9: Speicherort
- 10: Zusatz
- 11: Clientrechner
- 12: Webdienstkonsument
- 13: Datennetzwerk
- 14: Anfrage
- 15: Aufruf
- 16: Einlesen
- 17: Zuordnung
- 18: Applikationsaufruf
- 19: Applikationsergebnis
- 20: Antwort
- 21: übergeordnete Funktionsidentifikation
- 30: erster Verweis
- 31: zweiter Verweis
- 32: Verweis auf Applikationsbibliothek
- A - L: Verfahrensschritte

## Patentansprüche

1. Verfahren zur Erzeugung eines Webdienstes aufweisend folgende Schritte:
a) Definition einer übergeordneten Funktionsidentifikation (21),
b) Bereitstellen einer Applikationsbibliothek (5) umfassend eine erste (6) und mindestens eine zweite (7) ausführbare Applikation,
c) Bereitstellen einer Konfigurationsdatei (4) in einem Konfigurationsverzeichnis, die für die übergeordnete Funktionsidentifikation (21) einen Applikationsnamen (8), einen Speicherort (9) innerhalb der Applikationsbibliothek (5), sowie einen Zusatz (10) mit Information über die Verwendung eines Zusatzparameters bereitstellt,
d) Bereitstellen eines Adapterprogramms (3) zum Aufruf einer der übergeordneten Funktionsidentifikation (21) gemäß Konfigurationsdatei (4) zugeordneten ersten (6) oder zweiten (7) ausführbaren Applikation,
e) Generierung eines Webdienstanbieters (2), wobei die Dienste des Webdienstanbieters (2) von einem Webdienstkonsumenten (12) über die übergeordnete Funktionsidentifikation (21) über genau eine Portnummer aufrufbar sind.

2. Verfahren nach Anspruch 1,
**dadurch gekennzeichnet, dass** zum Zugriff auf die erste (6) oder mindestens eine zweite ausführbare Applikation (7) innerhalb der Applikationsbibliothek (5) eine Schnittstelle unter Verwendung der Extensible Markup Language für Eingabe und Ausgabe definiert wird.

3. Verfahren nach Anspruch 2,
wobei die Schnittstelle den Zusatzparameter in Form eines C-Headers umfasst.

4. Verfahren nach einem der Ansprüche 1 bis 3,
wobei die erste (6) und/oder mindestens eine zweite (7) ausführbare Applikation nachladbar ist/sind.

5. Verfahren nach einem der Ansprüche 1 bis 4,
wobei in dem Konfigurationsverzeichnis zu jedem Zeitpunkt weitere Konfigurationsdateien speicherbar sind.

6. Verfahren nach Anspruch 2,
wobei weitere Applikationsbibliotheken ansprechbar sind.

7. Verfahren zur Nutzung eines Webdienstes aufweisend folgende Schritte:
a) Einlesen einer Anfrage (14) eines Webdienstkonsumenten (12) über eine Portnummer durch einen Webdienstanbieter (2),
b) Analyse der Anfrage (14) hinsichtlich einer übergeordneten Funktionsidentifikation (21) und übergebener Dienstparameter,
c) Lesen einer Konfigurationsdatei (4), in der der übergeordneten Funktionsidentifikation (21) zugeordnet folgende Informationen gespeichert sind: ein Applikationsname (8), ein Speicherort (9) innerhalb einer Applikationsbibliothek (5), sowie ein Zusatz (10) mit Information über die Verwendung eines Zusatzparameters,
d) Auflösen der Zuordnung der übergeordneten Funktionsidentifikation (21) zu einer ersten oder mindestens einer zweiten ausführbaren Applikation (6 oder 7) gemäß der Konfigurationsdatei (4),
e) Aufruf der ersten (6) oder einer zweiten (7) ausführbaren Applikation in der Applikationsbibliothek (5) entsprechend der Zuordnung in der Konfigurationsdatei (4) mit den übergebenen Dienstparametern,
f) Generieren einer Antwort (20) aus einem von der ausführbaren Applikation (6) zurück gelieferten Applikationsergebnis (19),
g) Bereitstellen der Antwort (20) zur Übermittlung an den Webdienstkonsumenten (12) über die Portnummer und ein Datennetzwerk (13).

8. Verfahren nach Anspruch 7,
wobei der Webdienstanbieter (2) zur Verarbeitung der Anfrage (14) und zur Generierung der zugehörigen Antwort (20) unter Verwendung des Webdienststandards ausgelegt ist.

9. Verfahren nach Anspruch 7 oder 8,
wobei der Webdienstanbieter (2) zusätzlich zur Verarbeitung der Anfrage (14) unter Verwendung von HTTP GET und/oder HTTP POST und Generierung der zugehörigen Antwort (20) ausgelegt ist.

10. Verfahren nach einem der Ansprüche 7 bis 9,
wobei eine Übergabe der Dienstparameter im Format der Extensible Markup Language erfolgt.

11. Anordnung zur Erzeugung und/oder Nutzung eines Webdienstes aufweisend
- einen Webdienstanbieter (2) umfassend eine Datenschnittstelle zur Kommunikation über ein Datennetzwerk (13), die genau eine Portnummer nutzt,
- eine Konfigurationsdatei (4) umfassend eine Zuordnung eines Applikationsnamens (8) einer ersten ausführbaren Applikation (6) zu einer übergeordneten Funktionsidentifikation (21), einen Speicherort (9) einer ersten ausführbaren Applikation (6) innerhalb einer Applikationsbibliothek (5) und einen Zusatz (10) mit Information über das Vorhandensein des Zusatzparameters,
- die Applikationsbibliothek (5) umfassend die erste (6) und mindestens eine zweite (7) ausführbare Applikation,
- ein Adapterprogramm (3) zum Aufruf der ersten (6) oder mindestens der zweiten (7) ausführbaren Applikation entsprechend der Zuweisung in der Konfigurationsdatei (4).

12. Anordnung nach Anspruch 11,
wobei die Dienste des Webdienstanbieters (2) über den Webdienststandard ansprechbar sind.

13. Anordnung nach Anspruch 11 oder 12,
wobei die Dienste des Webdienstanbieters (2) zusätzlich über HTTP GET und/oder HTTP POST nutzbar sind.

14. Anordnung nach einem der Ansprüche 11 bis 13,
wobei die Konfigurationsdatei (4) dem Format der Extensible Markup Language entspricht.

15. Anordnung nach einem der Ansprüche 11 bis 14,
wobei das Adapterprogramm (3) zusätzlich zur Verarbeitung des Zusatzparameters ausgelegt ist.
